# EUROPEAN PATENT APPLICATION

(11) **EP 4 834 850 A1**
(43) Date of publication of application: **04.11.2026**
(21) Application number: 24911035.4
(22) Date of filing: 23.12.2024
(51) Int. Cl.: C02F 1/02, F28D 21/00, C02F 103/08

(54) **MARINE ORGANISM SUPPRESSION SYSTEM AND WIND TURBINE GENERATOR SET**

(30) Priority: 29.12.2023 CN 202311864630
(71) Applicant: GOLDWIND SCIENCE & TECHNOLOGY CO., LTD., Xinjiang 830026 (CN)
(72) Inventor: JIAN, Jinjin, Beijing 100176 (CN); WANG, Liheng, Beijing 100176 (CN); ZHANG, Jingyi, Beijing 100176 (CN)
(74) Representative: Hoffmann Eitle
(86) International application number: PCT/CN2024/141463
(87) International publication number: WO 2025/140107

(57) **Abstract**

A marine organism suppression system and a wind turbine generator set. The marine organism suppression system comprises a seawater heat exchange system (10), heat exchange between seawater and a hot coolant being carried out in the seawater heat exchange system (10); a seawater accommodating tank (20) used for accommodating the seawater; a hot water bypass (30) for bringing a seawater discharge port (12) of the seawater heat exchange system (10) into communication with the seawater accommodating tank (20); a main seawater channel (40) for bringing the seawater accommodating tank (20) into communication with a seawater inflow port (11) of the seawater heat exchange system (10); and a water pump (50) used for supplying seawater to the seawater accommodating tank (20) and for supplying the seawater in the seawater accommodating tank (20) to the seawater inflow port (11) of the seawater heat exchange system (10) through the main seawater channel (40). Marine organisms in seawater in the seawater heat exchange system (10) are killed by using the waste heat of the seawater heat exchange system (10), the system is simple, stable and reliable, almost requires no maintenance, and has good economy.

## Description

### FIELD

The present disclosure relates to a marine biofouling inhibition system and a wind turbine generator system, and in particular to a marine biofouling inhibition system that inhibit marine organisms by utilizing waste heat of a seawater heat exchange system, and a wind turbine generator system having the same.

### BACKGROUND

An offshore wind turbine generator system has a capacity that is becoming larger and thus the air cooling technology encounters technical bottlenecks. In that case, a seawater cooling technology is increasingly widely used for cooling. In addition to the wind power field, the seawater cooling technology is further widely used in the ship field or power plant field for cooling.

When utilizing seawater for cooling, it is necessary to filter the seawater first to avoid clogging of the seawater heat exchange system. Marine organisms such as microorganisms, fish eggs, etc., still exist in the filtered seawater, which may cause severe pipeline fouling when they enter the seawater heat exchange system. Therefore, it is required to eliminate marine organisms.

### SUMMARY

One object of the present disclosure is to provide a marine biofouling inhibition system capable of eliminating organisms in the seawater used in the seawater heat exchange system by utilizing the waste heat of a seawater heat exchange system, and a wind turbine generator system having the marine biofouling inhibition system.

Another object of the present disclosure is to provide a marine biofouling inhibition system capable of improving elimination efficiency and preventing marine organisms from developing tolerance and causing damage to the seawater heat exchange system, and a wind turbine generator system having the marine biofouling inhibition system.

According to one aspect of the present disclosure, a marine biofouling inhibition system is provided, which includes: a seawater heat exchange system, in which a heat exchange between seawater and a heated coolant is performed; a seawater accommodation tank, used for accommodating seawater; a heated water bypass channel communicating a seawater outlet of the seawater heat exchange system with the seawater accommodation tank; a seawater main channel communicating the seawater accommodation tank with a seawater inlet of the seawater heat exchange system; and a water pump, used for feeding seawater into the seawater accommodation tank and for feeding the seawater in the seawater accommodation tank to the seawater inlet of the seawater heat exchange system through the seawater main channel.

In an embodiment, a temperature sensor is provided on the heated water bypass channel, and the marine biofouling inhibition system further includes a main loop channel; the temperature sensor is used for sensing the water temperature in the heated water bypass channel; the main loop channel is in communication with the seawater outlet; and when the temperature sensed by the temperature sensor is greater than a preset value, a portion of the seawater discharged from the seawater outlet is discharged to the sea through the main loop channel.

In an embodiment, the marine biofouling inhibition system further includes a filter, the filter is located on an upstream side of the water pump, and the water pump feeds the seawater filtered by the filter into the seawater accommodation tank.

In an embodiment, a heated water bypass channel control valve is provided on the heated water bypass channel, used for opening or closing the heated water bypass channel or adjusting a seawater flow rate in the heated water bypass channel. The marine biofouling inhibition system further includes a main loop channel, and a main loop control valve is disposed on the main loop channel, used for opening or closing the main loop channel or adjusting the seawater flow in the main loop channel.

In an embodiment, the marine biofouling inhibition system further includes a seawater electrolysis bypass channel and a seawater electrolysis system, the seawater outlet is in communication with a first communication point of the seawater electrolysis system through the seawater electrolysis bypass channel, and the seawater electrolysis system is used for generating a hypochlorous acid using the seawater fed from the seawater outlet and eliminating marine organisms in the seawater fed to the seawater inlet by the generated hypochlorous acid.

In an embodiment, a seawater electrolysis bypass channel control valve is provided on the seawater electrolysis bypass channel, used for opening or closing the seawater electrolysis bypass channel or adjusting a seawater flow rate in the seawater electrolysis bypass channel.

In an embodiment, a heated water bypass channel control valve is provided on the heated water bypass channel, used for opening or closing the heated water bypass channel or adjusting a seawater flow rate in the heated water bypass channel. When the seawater electrolysis bypass channel control valve is opened, the heated water bypass channel control valve is closed, and when the seawater electrolysis bypass channel control valve is closed, the heated water bypass channel control valve is opened.

In an embodiment, the seawater electrolysis system is provided with a first hypochlorous acid feeding port, and the first hypochlorous acid feeding port is in communication with the seawater accommodation tank.

In an embodiment, the seawater electrolysis system is provided with a second hypochlorous acid feeding port, and the second hypochlorous acid feeding port is in communication with an upstream side of the water pump.

In an embodiment, the seawater electrolysis system is provided with a third hypochlorous acid feeding port, and the third hypochlorous acid feeding port is in communication with a downstream side of the seawater main channel.

In an embodiment, the marine biofouling inhibition system further includes at least one residual chlorine detector provided inside the seawater accommodation tank and/or on the seawater main channel.

In an embodiment, the marine biofouling inhibition system further includes an copper-aluminum electrolytic system, the copper-aluminum electrolytic system is used for generating Cu₂O and Al(OH)₃ capable of forming a protective layer, and the copper-aluminum electrolytic system is connected to at least one of the seawater accommodation tank, an upstream side of the water pump, and the seawater main channel to feed Cu₂O and Al(OH)₃.

In an embodiment, the marine biofouling inhibition system further includes a direct dosing system, the direct dosing system stores therein an agent capable of eliminating marine organisms, and the direct dosing system is connected to at least one of the seawater accommodation tank, an upstream side of the water pump, and the seawater main channel to feed the agent.

According to another aspect of the present disclosure, a wind turbine generator system is provided, which includes the marine biofouling inhibition system as described above.

According to the present disclosure, by providing a heated water bypass channel to eliminate marine organisms in the seawater used in the seawater heat exchange system by utilizing the waste heat of the seawater heat exchange system, the system is simple, stable, reliable, requires few maintenance, and is highly economical. In addition, by utilizing the waste heat of the seawater heat exchange system to eliminate marine organisms in the seawater used in the seawater heat exchange system, the heated water discharged into the sea is reduced, the water circulation utilization rate is improved, and the impact on the seawater environment is reduced.

Moreover, according to the present disclosure, the marine biofouling inhibition technology utilizing the waste heat of the seawater heat exchange system to and the existing marine biofouling inhibition technologies can be used alternately, which can avoid the economic loss caused by system shutdown during maintenance of the existing single marine biofouling inhibition system, improve the heat exchange efficiency and the working efficiency of the entire system, and improve the elimination efficiency at the same time.

### BRIEF DESCRIPTION OF THE DRAWINGS

FIG. 1 shows a marine biofouling inhibition system according to a first embodiment of the present disclosure.
FIG. 2 shows a marine biofouling inhibition system according to a second embodiment of the present disclosure.
FIG. 3 shows a marine biofouling inhibition system according to a third embodiment of the present disclosure.

Description of reference numerals in figures:
10-seawater heat exchange system, 11-seawater inlet, 12-seawater outlet, 20-seawater accommodation tank, 30-heated water bypass channel, 31-temperature sensor, 32-heated water bypass channel control valve, 40-seawater main channel, 50-water pump, 60-main loop channel, 61-main loop control valve, 70-filter, 81-seawater electrolysis bypass channel, 81a-seawater electrolysis bypass channel control valve, 82-seawater electrolysis system, 82a-first communication point, 82b-first hypochlorous acid feeding port, 82c-second hypochlorous acid feeding port, 82d-third hypochlorous acid feeding port, 90-copper-aluminum electrolytic system, 91-first feeding port, 92-second feeding port, 93-third feeding port, L1-first hypochlorous acid channel, L2-second hypochlorous acid channel, L3-third hypochlorous acid channel, M1-first feeding channel, M2-second feeding channel, M3-third feeding channel, P1-first residual chlorine detector, P2-second residual chlorine detector, P3-third residual chlorine detector.

### DETAILED DESCRIPTION OF THE EMBODIMENTS

The technical solutions in the embodiments of the present disclosure will be clearly and completely described below in conjunction with the accompany drawings in the embodiments of the present disclosure. Obviously, the described embodiments are only a part of the embodiments of the present disclosure, rather than all of the embodiments. Based on the embodiments in the present disclosure, all other embodiments obtained by those skilled in the art without making creative efforts shall fall within the protection scope of the present disclosure.

Unless otherwise defined, all technical and scientific terms used herein have the same meaning as commonly understood by those skilled in the art to which the present disclosure belongs. The terms used in the description of the present disclosure are only for the purpose of describing specific embodiments and are not intended to limit the present disclosure.

In the fields of wind power, ships, power plants, etc., it is increasingly popular to replace the air cooling technology by the seawater cooling technology for cooling. That is, the heated coolant exchanges heat with seawater in the seawater heat exchange system, the cooled coolant after the heat exchange then flows back to the heat source to continue cooling the heat source, and the heated seawater after the heat exchange is directly discharged into the sea.

When utilizing seawater for cooling, it is necessary to filter the seawater first to prevent the seawater from clogging the seawater heat exchange system. The marine organisms such as microorganisms, fish eggs, etc., still exist in the filtered seawater, and when they enter the seawater heat exchange system, it may cause severe pipeline fouling, thereby affecting the power generation efficiency of, for example, wind turbine generator systems. Therefore, it is required to eliminate marine organisms.

A marine biofouling inhibition system is provided in the present disclosure, which is capable of eliminating organisms in the seawater used in the seawater heat exchange system by utilizing the waste heat of a seawater heat exchange system.

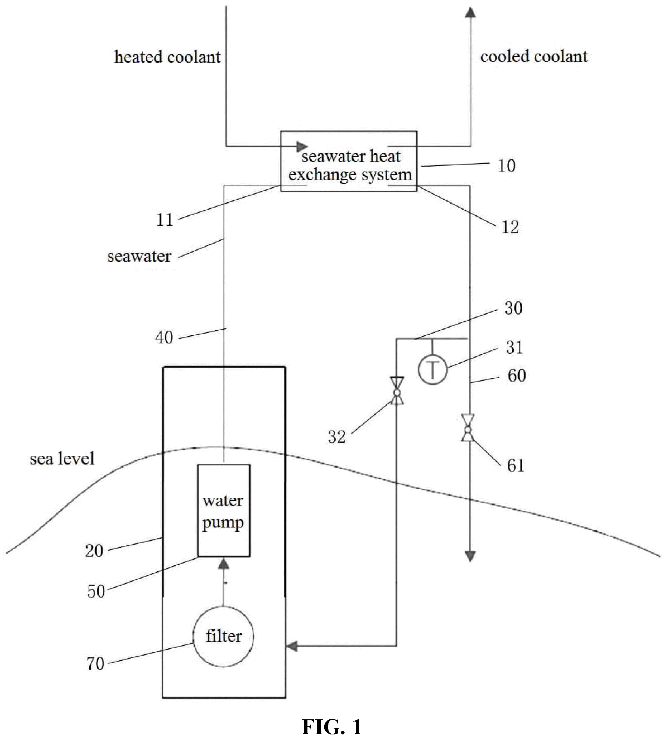

Hereinafter, the marine biofouling inhibition system according to the embodiments of the present disclosure will be described with reference to FIGS. 1 to 3.

FIG. 1 shows a marine biofouling inhibition system according to a first embodiment of the present disclosure. As shown in FIG. 1, the marine biofouling inhibition system according to the embodiment of the present disclosure may include: a seawater heat exchange system 10 in which a heat exchange is performed between the seawater and a heated coolant; a seawater accommodation tank 20 used for accommodating seawater; a heated water bypass channel 30 communicating a seawater outlet 12 of the seawater heat exchange system 10 with the seawater accommodation tank 20; a seawater main channel 40 communicating the seawater accommodation tank 20 with a seawater inlet of the seawater heat exchange system 10; and a water pump 50 used for feeding the seawater into the seawater accommodation tank 20 and for feeding the seawater in the seawater accommodation tank 20 to the seawater inlet 11 of the seawater heat exchange system 10 through the seawater main channel 40.

As shown in FIG. 1, the water pump 50 is used for feeding the seawater in the seawater accommodation tank 20 to the seawater inlet 11 of the seawater heat exchange system 10 through the seawater main channel 40 so as to enter the seawater heat exchange system 10 and heat exchanges with the heated coolant (for example, from a nacelle of a wind turbine generator system) therein. After the heat exchange, the cooled coolant flows back to the heat source to continue cooling the heat source (for example, the nacelle of the wind turbine generator system). According to the embodiment of the present disclosure, the heated seawater after the heat exchange is not directly discharged into the sea, but enters the seawater accommodation tank 20 through the heated water bypass channel 30 that communicates the seawater outlet 12 of the seawater heat exchange system 10 with the seawater accommodation tank 20.

According to the embodiment of the present disclosure, the seawater heat exchange system 10, the heated water bypass channel 30, the seawater accommodation tank 20, and the seawater main channel 40 form a closed loop, and the temperature of the seawater after one or more heat exchanges may reach 40 to 60°C. When the temperature of the seawater is higher than 30°C, it can cause the embryonic development of marine organisms to stagnate or produce deformities and death of marine organisms, and very few marine organisms can survive in the water at a temperature exceeding 35 to 40°C. Therefore, when the seawater after the heat exchange enters the seawater accommodation tank 20 through the heated water bypass channel 30, it can eliminate the marine organisms in the seawater in the seawater accommodation tank 20. Specifically, the seawater after the heat exchange can instantaneously eliminate the marine organisms in the seawater accommodation tank 20 after entering it. Further, after mixing with the seawater in the seawater accommodation tank 20, the temperature of the seawater after the heat exchange may still exceed 35°C, thereby continuously eliminating the marine organisms in the seawater accommodation tank 20.

According to the embodiment of the present disclosure, by providing the heated water bypass channel to eliminate marine organisms in the seawater used in the seawater heat exchange system by utilizing the waste heat of the seawater heat exchange system, the system is simple, stable, reliable, requires few maintenance, and is highly economical. In addition, by utilizing the waste heat of the seawater heat exchange system to eliminate marine organisms in the seawater used in the seawater heat exchange system, the heated water discharged into the sea is reduced, the water circulation utilization rate is improved, and the impact on the seawater environment is reduced.

According to the embodiment of the present disclosure, the seawater heat exchange system 10 may be, for example, a tubular heat exchanger, but the present disclosure is not limited thereto, as long as the heat exchange between the seawater and the coolant can be achieved. According to the embodiment of the present disclosure, the water pump 50 may be located inside the seawater accommodation tank 20 to feed the seawater into the seawater accommodation tank 20 and feed the seawater in the seawater accommodation tank 20 to the seawater inlet 11 of the seawater heat exchange system 10 through the seawater main channel 40. The specific structures of the seawater accommodation tank 20 and the water pump 50 are not limited. As an example, the water pump 50 may feed the seawater into the seawater accommodation tank 20 after preliminary filtration.

According to the embodiment of the present disclosure, as shown in FIG. 1, the marine biofouling inhibition system may further include a filter 70. The filter 70 is located on an upstream side of the water pump 50, and the water pump feeds the seawater filtered by the filter 70 into the seawater accommodation tank 20. The specific location and structure of the filter 70 are not limited, as long as the seawater entering the seawater accommodation tank 20 can be filtered.

According to the embodiment of the present disclosure, as shown in FIG. 1, a temperature sensor 31 may be provided on the heated water bypass channel 30, and the temperature sensor 31 is used for sensing the water temperature in the heated water bypass channel 30. According to the embodiment of the present disclosure, as shown in FIG. 1, a heated water bypass channel control valve 32 may be further provided on the heated water bypass channel 30 for opening or closing the heated water bypass channel 30 or adjusting the seawater flow rate in the heated water bypass channel 30.

According to the embodiment of the present disclosure, as shown in FIG. 1, the marine biofouling inhibition system may further include a main loop channel 60, and the main loop channel 60 is in communication with the seawater outlet 12. A main loop control valve 61 is provided on the main loop channel 60 for opening or closing the main loop channel 60 or adjusting the seawater flow rate in the main loop channel 60.

According to the embodiment of the present disclosure, to prevent the temperature of the seawater in the seawater accommodation tank 20 from being too high, resulting in poor cooling effect, the temperature of the seawater in the seawater accommodation tank 20 can be adaptably controlled. When the temperature sensed by the temperature sensor 31 is greater than a preset value (the preset value may be 60°C or higher), the main loop control valve 61 can be opened to adjust the flow rate, so that a part of the seawater discharged from the seawater outlet 12 is discharged to the sea through the main loop channel 60, reducing the amount of heated seawater flowing into the seawater accommodation tank 20.

According to the embodiment of the present disclosure, the marine biofouling inhibition technology utilizing the waste heat of the seawater heat exchange system 10 can also be used in combination with other traditional marine biofouling inhibition technologies known in the art (for example, a seawater electrolysis system, a copper-aluminum electrolytic system, and a direct dosing system).

For the seawater electrolysis system, it electrolyzes seawater by an electrolytic cell so as to generate a hypochlorous acid, which can effectively eliminate marine organisms when the residual chlorine amount is 2 to 5 ppm. For the copper-aluminum electrolytic system, it electrolyzes a copper anode and an aluminum anode to generate Cu₂O and Al(OH)₃, and this highly viscous flocculent substance can be distributed in the areas where marine organism larvae may inhabit, forming a very thin protective layer to inhibit marine organisms. For the direct dosing system, it can store agents and directly feed sodium hypochlorite or other non-oxidizing drugs (mainly including quaternary ammonium salts, isothiazolinone, quaternary phosphonium salts, organic guanidines, etc.) to the system.

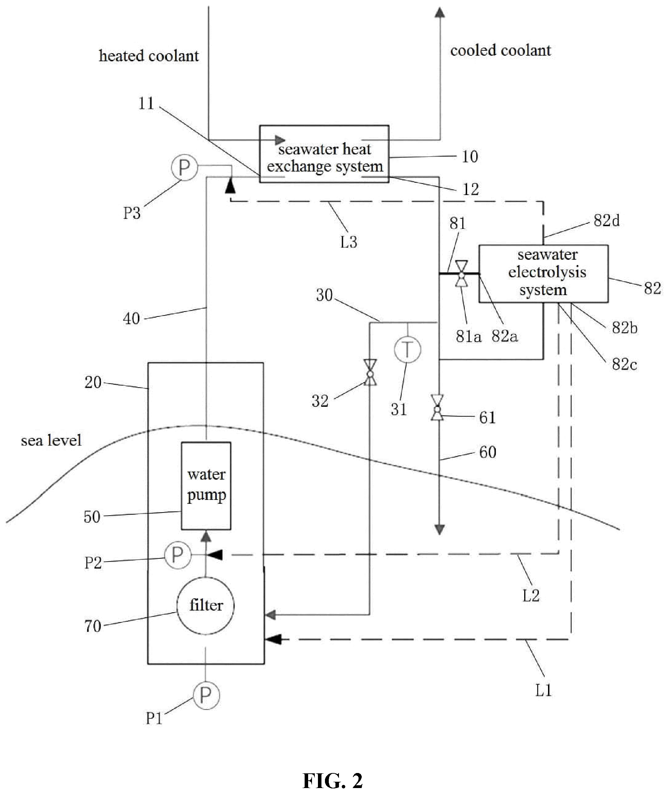

FIG. 2 shows a marine biofouling inhibition system according to a second embodiment of the present disclosure. In the marine biofouling inhibition system according to the second embodiment of the present disclosure, the marine biofouling inhibition technology utilizing the waste heat of the seawater heat exchange system 10 is used in combination with the existing seawater electrolysis system. To avoid redundancy, only the structure different from that of the marine biofouling inhibition system of the first embodiment will be described.

As shown in FIG. 2, the marine biofouling inhibition system according to the embodiments of the present disclosure may further include a seawater electrolysis bypass channel 81 and a seawater electrolysis system 82. The seawater outlet 12 is in communication with a first communication point 82a of the seawater electrolysis system 82 through the seawater electrolysis bypass channel 81, and the seawater electrolysis system 82 is used for generating the hypochlorous acid using the seawater discharged through the seawater outlet 12 and eliminating marine organisms in the seawater fed to the seawater inlet 11 by the generated hypochlorous acid. The specific structure of the seawater electrolysis system is not limited, as long as it can generate the hypochlorous acid using the seawater.

According to the embodiment of the present disclosure, the seawater electrolysis system 82 is in communication with the seawater outlet 12 through the seawater electrolysis bypass channel 81, and generates the hypochlorous acid using the seawater discharged through the seawater outlet 12. Compared with the case where a separate water pump is provided to draw seawater from the sea to generate the hypochlorous acid, one additional water pump can be saved. Further, the seawater electrolysis system 82 utilizes the seawater discharged through the seawater outlet 12, which does not need to be filtered again and has good water quality, and thus is beneficial for reducing maintenance costs.

According to the embodiment of the present disclosure, the marine biofouling inhibition technology utilizing the waste heat of the seawater heat exchange system 10 and the marine biofouling inhibition technology utilizing the seawater electrolysis system can be used alternately.

Further, for the seawater electrolysis system, since calcium and magnesium ions contained in seawater react with OH⁻ at the cathode to form scale, the seawater electrolysis system requires periodic acid cleaning maintenance, and the maintenance cycle is short. In the existing marine biofouling inhibition technologies, when maintaining the seawater electrolysis system, the entire system needs to be shut down (for example, in the wind power field, the wind turbine generator system needs to be shut down before maintenance), affecting the working efficiency of the entire system.

According to the embodiment of the present disclosure, the marine biofouling inhibition technology utilizing the waste heat of the seawater heat exchange system 10 and the marine biofouling inhibition technology utilizing the seawater electrolysis system can be used alternately, which can avoid the economic loss caused by the system shutdown during maintenance of the existing single marine biofouling inhibition system, and improve the heat exchange efficiency and the working efficiency of the entire system. In addition, the marine biofouling inhibition technology utilizing waste heat can effectively eliminate the vast majority of marine organisms, and the hypochlorous acid generated by the seawater electrolysis system is mainly effective against larvae and eggs. The alternate use of these two technologies can improve the elimination efficiency and prevent marine organisms from developing tolerance and causing damage to the system.

Specifically, a seawater electrolysis bypass channel control valve 81a may be provided on the seawater electrolysis bypass channel 81 for opening or closing the seawater electrolysis bypass channel 81 or adjusting the seawater flow rate in the seawater electrolysis bypass channel 81. When the seawater electrolysis bypass channel control valve 81a is opened, the heated water bypass channel control valve 32 is closed, and when the seawater electrolysis bypass channel control valve 81a is closed, the heated water bypass channel control valve 32 is opened.

According to the embodiment of the present disclosure, when the seawater electrolysis bypass channel control valve 81a is opened and the heated water bypass channel control valve 32 is closed, the main loop control valve 61 may be opened or closed according to the amount of seawater required by the seawater electrolysis system 82. That is, when the amount of seawater discharged through the seawater outlet 12 is greater than the amount of seawater required by the seawater electrolysis system 82, the main loop control valve 61 can be opened to discharge a part of the heat-exchanged seawater through the main loop channel 60.

According to the embodiment of the present disclosure, the seawater electrolysis system 82 may include a first hypochlorous acid feeding port 82b, and the first hypochlorous acid feeding port 82b is in communication with the seawater accommodation tank 20. Specifically, the hypochlorous acid generated by the seawater electrolysis system 82 can be fed through from the first hypochlorous acid feeding port 82b to the seawater accommodation tank 20 through a first hypochlorous acid channel L1, so as to perform a first elimination on the marine organisms in the seawater in the seawater accommodation tank 20. A first residual chlorine detector P1 may be provided inside the seawater accommodation tank 20 for detecting residual chlorine. When the residual chlorine amount detected by the first residual chlorine detector P1 is 2 to 5 ppm, an effective elimination of marine organisms can be achieved.

According to the embodiment of the present disclosure, the seawater electrolysis system 82 may further include a second hypochlorous acid feeding port 82c, and the second hypochlorous acid feeding port 82c can be in communication with the upstream side of the water pump 50 through a second hypochlorous acid channel L2, so as to perform a second elimination on the marine organisms in the seawater before the seawater enters the seawater main channel 40. Similarly, a second residual chlorine detector P2 may be provided at a communication point at which the second hypochlorous acid channel L2 is in communication with the upstream side of the water pump 50 for detecting residual chlorine. When the residual chlorine amount detected by the second residual chlorine detector P2 is 2 to5 ppm, an effective elimination of marine organisms can be achieved.

According to the embodiment of the present disclosure, the seawater electrolysis system 82 may further include a third hypochlorous acid feeding port 82d, and the third hypochlorous acid feeding port 82d is in communication with a downstream side of the seawater main channel 40. Specifically, the third hypochlorous acid feeding port 82d is in communication with the downstream side of the seawater main channel 40 at a location close to the seawater inlet 11 of the seawater heat exchange system 10. The hypochlorous acid generated by the seawater electrolysis system 82 can be fed from the third hypochlorous acid feeding port 82d to the downstream of the seawater main channel 40 through a third hypochlorous acid channel L3, so as to perform a third elimination on the marine organisms in the seawater flowing through the downstream of the seawater main channel 40. A third residual chlorine detector P3 may be provided at a communication point at which the third hypochlorous acid channel L3 is in communication with the seawater main channel 40 for detecting residual chlorine. When the residual chlorine amount detected by the third residual chlorine detector P3 is 2 to 5 ppm, an effective elimination of marine organisms can be achieved.

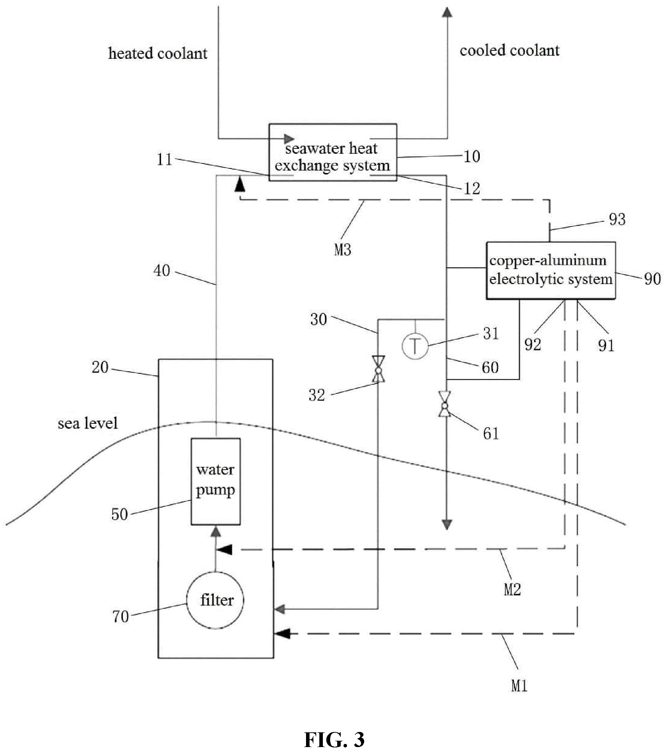

FIG. 3 shows a marine biofouling inhibition system according to a third embodiment of the present disclosure. In the marine biofouling inhibition system according to the third embodiment of the present disclosure, the marine biofouling inhibition technology utilizing the waste heat of the seawater heat exchange system 10 is used in combination with the existing copper-aluminum electrolytic system. To avoid redundancy, only the structure different from that of the marine biofouling inhibition system of the first embodiment will be described.

As shown in FIG. 3, the marine biofouling inhibition system according to the embodiment of the present disclosure may further include a copper-aluminum electrolytic system 90. The copper-aluminum electrolytic system 90 is used for generating Cu₂O and Al(OH)₃ capable of forming a protective layer, and the copper-aluminum electrolytic system 90 is connected to the seawater accommodation tank 20 and/or the seawater main channel 40 to feed Cu₂O and Al(OH)₃. As described above, the Cu₂O and Al(OH)₃ generated by the copper-aluminum electrolytic system 90 are high-viscous flocculent substances, which are distributed in areas where the marine organism larvae may inhabit, forming a thin protective layer to inhibit marine organisms. The specific structure of the copper-aluminum electrolytic system 90 is not limited, as long as it can generate Cu₂O and Al(OH)₃ capable of forming a protective layer. The positions at which the copper-aluminum electrolytic system 90 feeds Cu₂O and Al(OH)₃ are substantially the same as the positions at which the seawater electrolysis system 82 feeds hypochlorous acid. Specifically, the copper-aluminum electrolytic system 90 may include a first feeding port 91, and the first feeding port 91 is in communication with the seawater accommodation tank 20 through a first feeding channel M1 to feed Cu₂O and Al(OH)₃ to the seawater accommodation tank 20. The copper-aluminum electrolytic system 90 may further include a second feeding port 92, and the second feeding port 92 is in communication with an upstream side of the water pump 50 through a second feeding channel M2 to feed Cu₂O and Al(OH)₃ to the upstream of the filter 70 of the seawater main channel 40. The copper-aluminum electrolytic system 90 may further include a third feeding port 93, and the third feeding port 93 is in communication with the downstream side of the seawater main channel 40 through a third feeding channel M3. Specifically, the third feeding port 93 is in communication with the downstream side of the seawater main channel 40 at a location close to the seawater inlet 11 of the seawater heat exchange system 10. According to the embodiment of the present disclosure, the seawater discharged from the seawater outlet 12 can be fed to the copper-aluminum electrolytic system 90 through a pipeline, and Cu₂O and Al(OH)₃ can be fed to the required locations after being dissolved in water. In addition, the unused seawater can be discharged to the sea through the main loop channel 60.

According to the embodiment of the present disclosure, the marine biofouling inhibition technology utilizing the waste heat of the seawater heat exchange system 10 and the marine biofouling inhibition technology utilizing the copper-aluminum electrolytic system can be used alternately, which can avoid the economic loss caused by system shutdown during maintenance of the existing single marine biofouling inhibition system, and improve the heat exchange efficiency and the working efficiency of the entire system.

In addition, although not shown, in the marine biofouling inhibition system according to the embodiment of the present disclosure, the marine biofouling inhibition technology utilizing the waste heat of the seawater heat exchange system 10 can also be used in combination with the existing direct dosing system.

That is, according to the embodiment of the present disclosure, the marine biofouling inhibition system may further include a direct dosing system. The direct dosing system stores therein an agent capable of eliminating marine organisms, and is connected to the seawater accommodation tank 20 and/or the seawater main channel 40 to feed the agent.

As described above, the direct dosing system can store agents and directly feed sodium hypochlorite or other non-oxidizing drugs (mainly including quaternary ammonium salts, isothiazolinone, quaternary phosphonium salts, organic guanidines, etc.) to the system. For the direct dosing system, regular maintenance is required. According to the embodiment of the present disclosure, the marine biofouling inhibition technology utilizing the waste heat of the seawater heat exchange system 10 and the marine biofouling inhibition technology utilizing the direct dosing system can be used alternately, which can avoid the economic loss caused by system shutdown during maintenance of the existing single marine biofouling inhibition system, and improve the heat exchange efficiency and the working efficiency of the entire system.

As an example, a first dosing point of the direct dosing system may be in communication with the seawater accommodation tank 20, a second dosing point of the direct dosing system may be in communication with the upstream of the water pump 50, and a third dosing point of the direct dosing system may be in communication with the downstream side of the seawater main channel 40 (specifically, at a location close to the seawater inlet 11 of the seawater heat exchange system 10).

According to another embodiment of the present disclosure, a wind turbine generator system including the above-described marine biofouling inhibition system can be further provided.

According to the present disclosure, by providing the heated water bypass channel to eliminate marine organisms in the seawater used in the seawater heat exchange system by utilizing the waste heat of the seawater heat exchange system, the system is simple, stable, reliable, requires few maintenance, and is highly economical. In addition, by utilizing the waste heat of the seawater heat exchange system to eliminate marine organisms in the seawater used in the seawater heat exchange system, the heated water discharged into the sea is reduced, the water circulation utilization rate is improved, and the impact on the seawater environment is reduced.

Moreover, according to the present disclosure, the marine biofouling inhibition technology utilizing the waste heat of the seawater heat exchange system and the existing marine biofouling inhibition technologies can be used alternately, which can avoid the economic loss caused by system shutdown during maintenance of the existing single marine biofouling inhibition system, improve the heat exchange efficiency and the working efficiency of the entire system, and improve the elimination efficiency at the same time.

Although the exemplary embodiments of the present disclosure have been specifically described with reference to the exemplary embodiments thereof, those skilled in the art should understand that various changes in form and details can be made thereto without departing from the spirit and scope of the present disclosure as defined by the claims.

## Claims

1. A marine biofouling inhibition system, comprising:
a seawater heat exchange system;
a seawater accommodation tank;
a heated water bypass channel;
a seawater main channel; and
a water pump, wherein
a heat exchange between a seawater and a heated coolant is performed in the seawater heat exchange system, the seawater accommodation tank is configured for accommodating a seawater, a seawater outlet of the seawater heat exchange system is in communication with the seawater accommodation tank through the heated water bypass channel, the seawater accommodation tank is in communication with a seawater inlet of the seawater heat exchange system through the seawater main channel, and the water pump is configured for feeding the seawater into the seawater accommodation tank and feeding the seawater in the seawater accommodation tank to the seawater inlet of the seawater heat exchange system through the seawater main channel.

2. The marine biofouling inhibition system according to claim 1, wherein
a temperature sensor is provided on the heated water bypass channel, the marine biofouling inhibition system further comprises a main loop channel, the temperature sensor is configured for sensing the water temperature in the heated water bypass channel, and the main loop channel is in communication with the seawater outlet; and
when a temperature sensed by the temperature sensor is greater than a preset value, a part of the seawater discharged from the seawater outlet is discharged to a sea through the main loop channel.

3. The marine biofouling inhibition system according to claim 1, further comprising a filter, wherein
the filter is located on an upstream side of the water pump, and the water pump feeds the seawater filtered by the filter into the seawater accommodation tank.

4. The marine biofouling inhibition system according to claim 1, wherein
a heated water bypass channel control valve is provided on the heated water bypass channel and is configured for opening or closing the heated water bypass channel or adjusting a seawater flow rate in the heated water bypass channel; and
the marine biofouling inhibition system further comprises a main loop channel, and a main loop control valve is provided on the main loop channel and configured for opening or closing the main loop channel or adjusting a seawater flow rate in the main loop channel.

5. The marine biofouling inhibition system according to claim 1, further comprising:
a seawater electrolysis bypass channel; and
a seawater electrolysis system, wherein
the seawater outlet is in communication with a first communication point of the seawater electrolysis system through the seawater electrolysis bypass channel, and the seawater electrolysis system is configured for generating a hypochlorous acid using the seawater fed from the seawater outlet and eliminating marine organisms in the seawater fed to the seawater inlet by the generated hypochlorous acid.

6. The marine biofouling inhibition system according to claim 5, wherein
a seawater electrolysis bypass channel control valve is provided on the seawater electrolysis bypass channel for opening or closing the seawater electrolysis bypass channel or adjusting a seawater flow rate in the seawater electrolysis bypass channel.

7. The marine biofouling inhibition system according to claim 6, wherein
a heated water bypass channel control valve is provided on the heated water bypass channel for opening or closing the heated water bypass channel or adjusting a seawater flow rate in the heated water bypass channel; and
when the seawater electrolysis bypass channel control valve is opened, the heated water bypass channel control valve is closed, and when the seawater electrolysis bypass channel control valve is closed, the heated water bypass channel control valve is opened.

8. The marine biofouling inhibition system according to any one of claims 5 to 7, wherein
the seawater electrolysis system is provided with a first hypochlorous acid feeding port, and the first hypochlorous acid feeding port is in communication with the seawater accommodation tank.

9. The marine biofouling inhibition system according to claim 8, wherein
the seawater electrolysis system is provided with a second hypochlorous acid feeding port, and the second hypochlorous acid feeding port is in communication with an upstream side of the water pump.

10. The marine biofouling inhibition system according to claim 9, wherein
the seawater electrolysis system is provided with a third hypochlorous acid feeding port, and the third hypochlorous acid feeding port is in communication with a downstream side of the seawater main channel.

11. The marine biofouling inhibition system according to claim 10, wherein the marine biofouling inhibition system further comprises at least one residual chlorine detector, which is provided inside the seawater accommodation tank and/or on the seawater main channel.

12. The marine biofouling inhibition system according to claim 1, wherein
the marine biofouling inhibition system further comprises a copper-aluminum electrolytic system, and the copper-aluminum electrolytic system is configured for generating Cu₂O and Al(OH)₃ capable of forming a protective layer and is connected to at least one of the seawater accommodation tank, an upstream side of the water pump, and the seawater main channel to feed Cu₂O and Al(OH)₃.

13. The marine biofouling inhibition system according to claim 1, wherein
the marine biofouling inhibition system further comprises a direct dosing system, the direct dosing system stores therein an agent capable of eliminating marine organisms, and the direct dosing system is connected to at least one of the seawater accommodation tank, an upstream side of the water pump, and the seawater main channel to feed the agent.

14. A wind turbine generator system, comprising the marine biofouling inhibition system according to any one of claims 1 to 13.
